# EUROPÄISCHE PATENTSCHRIFT

(11) **EP 1 099 792 B1**
(45) Veröffentlichungstag und Bekanntmachung des Hinweises auf die Patenterteilung: **25.08.2004**
(21) Anmeldenummer: 01104165.4
(22) Anmeldetag: 06.09.1996
(51) Int. Cl.: D21B 1/32, B03D 1/14

(54) **Flotationsverfahren und Vorrichtung zur Abscheidung von Feststoff aus einer papierfaserhaltigen Suspension**
Flotation process and device for separating solid particles from a paper fibre suspension
Procédé de flotation et dispositif pour la séparation de particules solides d'une suspension à fibres

(30) Priorität: 26.03.1996 DE 19611864
(43) Veröffentlichungstag der Anmeldung: 16.05.2001
(62) Teilanmeldung aus: 96114266.8
(73) Patentinhaber: Voith Paper Fiber Systems GmbH & Co. KG, 88212 Ravensburg (DE)
(72) Erfinder: Britz, Herbert, 88213 Ravensburg-Weissenau (DE); Gommel, Axel, 88214 Ravensburg (DE); Holik, Herbert, 88213 Ravensburg (DE); Kriebel, Almut, 88250 Weingarten (DE); Schabel, Samuel, Dr., 88212 Ravensburg (DE); Martin, Thomas, 89129 Langenau (DE); Schulze, Hans-Joachim, Dr., 09599 Freiberg/Sa. (DE); Kemper, Martin, 88250 Weingarten (DE); Mannes, Wolfgang, 88213 Ravensburg-Bavendorf (DE)
(74) Vertreter: Manitz, Finsterwald & Partner Gbr

(56) Entgegenhaltungen:
- EP-A- 0 580 087
- EP-A- 0 674 040
- WO-A-85/00021
- GB-A- 2 281 521
- US-A- 5 039 400
- US-A- 5 234 112

## Beschreibung

Die Erfindung betrifft ein Flotationsverfahren gemäß dem Oberbegriff des Anspruchs 1 sowie eine Vorrichtung zur Durchführung des Verfahrens gemäß Oberbegriff des Anspruchs 27.

Flotationsverfahren werden bei der Behandlung von papierfaserhaltigen Suspensionen eingesetzt, um faserfremde Feststoffteilchen, wie z.B. Druckpartikel oder Kleberrückstände, aus der Suspension zu entfernen. Bei diesen an sich bekannten Verfahren wird der physikalische Effekt ausgenutzt, daß die Papierfasem hydrophil und ein großer Teil der störenden Verschmutzungen.hydrophob sind. Bei Durchführung einer Flotation gehen aus diesen Gründen die auszuscheidenden Feststoffpartikef an die Gasblasen, insbesondere Luftblasen. Diese steigen dann zusammen mit den angelagerten Teilchen im Erd-Schwerefeld zur Oberfläche oder im Zentrifugalfeld zur Mitte und bilden dort einen Schaum, in dem die unerwünschten Bestandteile aufkonzentriert sind. Eine andere Anwendung in der Papierindustrie ist die möglichst weitgehende Entfernung aller in einer Suspension enthaltenen Feststoffe. Man spricht in diesem letztgenannten Fall auch von Klärflotation, Totalflotation oder aufgrund der Blasenbildungsmechanismen von Entspannungsflotation.

Derartige Verfahren sind seit langem in Gebrauch und erfüllen ihren Zweck in vielen Fällen zur Zufriedenheit. Wie bei allen technischen Trennprozessen gibt es jedoch nach wie vor Probleme mit entweder zu geringer Entfernung der Schmutzstoffteilchen oder zu großem Verlust von Wertstoffen, insbesondere von Papierfasem oder von beiden gleichzeitig.

Bei der aus der US-PS 5 039 400 bekannten Erzflotation werden - anders als bei der Behandlung von Fasersuspensionen - die Wertstoffe mit dem Flotationsschaum ausgetragen. Das führt zu einer gänzlich anderen Aufteilung der Mengenströme, insbesondere einem Vielfachen der Schaummenge. Es ist bekannt, z.B. aus der EP 0 435 985 B1, in den Flotationsbehälter Wasser zuzugeben; diese Zugabe dient dabei dem Mengenausgleich, der erforderlich ist, um den mengenmäßig bedeutenden Verlust infolge des Abzuges von Wertstoffen zusammen mit dem Schaum auszugleichen.

Aus der US-PS 5 234 112 ist ein Schaum-Flotationsreaktor zur Trennung von hydrophoben und hydrophilen Produkten bekannt. Dieser Reaktor wird konkret im Zusammenhang mit der Erzflotation bei der Erzaufbereitung beschrieben, d.h. er dient zur Trennung der Erzbestandteile von der Gangart, wobei das Erz in den Flotationsschaum gelangt, wo es mittels hoher Strömungsgeschwindigkeiten in der Schwebe gehalten werden muss, um mit dem Schaum abtransportiert werden zu können. Es wird zwar in dieser US-PS 5 234 112 darauf hingewiesen, dass auch in Papierpulpe enthaltene Ink-Bestandteile oder Kaolin als erwünschtes Material gewonnen werden könnte, aber es wird zum einen nicht offenbart, wie dies in wirksamer Weise realisiert werden kann, und zum anderen beinhaltet diese Druckschrift keinerlei Hinweis darauf, dass man sich bereits im Flotationsschaum befindende Fasermaterialien, d.h. Gutstoffe nochmals zurückgewinnen könnte.

Der Erfindung liegt die Aufgabe zugrunde, zum einen eine wirksame Schmutzstoffentfernung aus Faserstoffsuspensionen zu erreichen und andererseits einen Verlust von Papierfasermaterial möglichst zu vermeiden bzw. zu minimieren.

Diese Aufgabe wird durch die in den Ansprüchen 1 und 27 genannten Maßnahmen erfüllt, wobei die Unteransprüche besonders günstige Ausgestaltungen des Verfahrens bzw. der Vorrichtung beschreiben.

Durch die gezielte und dosierte Flüssigkeitszuführung zu dem bereits gebildeten Flotationsschaum können sich die Papierfaserteilchen ohne Beeinträchtigung der Abführung der störenden Feststoffteilchen leicht durch die Struktur des Schaumes hindurch bewegen und wieder zurück in die Faserstoffsuspension gelangen. Dadurch wird die Rückgewinnung der Wertstoffe darstellenden Papierfasern aus dem Schaum heraus und zurück in die Faserstoffsuspension sichergestellt, während ohne diese Maßnahmen ihre Entfernung im Zusammenhang mit der Beseitigung der störenden Feststoffteilchen zu einem Verlust führen würde. Ein solcher Verlust kann zwar auch durch eine Sekundärflotation verringert oder vermieden werden, was aber einen beträchtlichen zusätzlichen Aufwand erfordert. Besonders vorteilhaft ist es, wenn der bereits gebildete Schaum zusätzlich stabilisiert wird, so dass die Gasblasen eine längere Zeit bis zum Platzen haben. Ein stabiler Schaum hält auch die hydrophoben Teile besser fest, was bezüglich der angestrebten Trennung von den hydrophilen Teilen wünschenswert ist.

Spezielle Maßnahmen zur gültigen Ausgestaltung des Verfahrens werden in den Unteransprüchen 2 bis 26 und hinsichtlich der Vorrichtung in den Unteransprüchen 27 bis 46 beschrieben. Die Wahl geeigneter Betriebsparameter ergibt sich aus den vorliegenden Bedingungen und gestellten Anforderungen. Beispielhafte Hinweise enthält die Beschreibung von Ausführungsbeispielen.

Die Erfindung und ihre Vorteile werden erläutert und dargestellt anhand von Zeichnungen. Dabei zeigen schematisch:
- Fig. 1: eine einfache erfindungsgemäße Flotationsvorrichtung;
- Fig. 2: eine Variante, säulenförmig aufgebaute Flotationsvorrichtung;
- Fig. 3: eine Flotationsvorrichtung mit Zentrifugalfeld;
- Fig. 4 und 5: diverse Vorrichtungen zur Zuführung der Flüssigkeit;
- Fig. 6: eine weitere Flotationsvorrichtung mit Zentrifugalfeld;
- Fig. 7: Variante der Flotationsvorrichtung der Fig. 3, anders betrieben;
- Fig. 8: Variante der Flotationsvorrichtung der Fig. 6, anders betrieben.

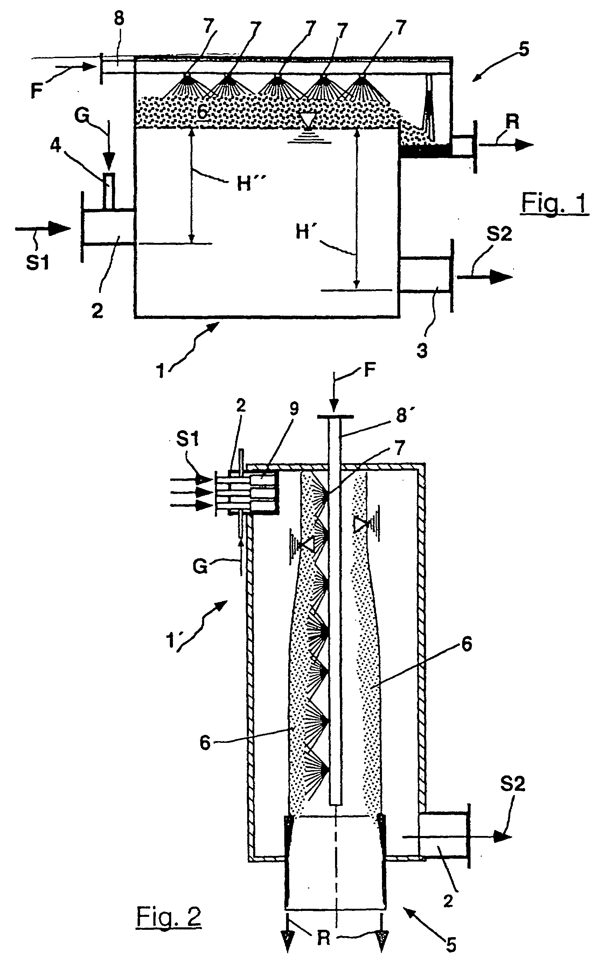

In Fig. 1 ist eine Flotationsvorrichtung dargestellt mit einem Flotationsbehälter 1, einem Einlauf 2 für die zu flotierende Suspension S 1, einem Auslauf 3 für die durch Flotation gereinigte Suspension S 2 sowie eine Flotationsschaum- Abführeinrichtung 5. Bei ähnlich ausgebildeten Flotationsvorrichtungen kann am Auslauf 3 anstelle einer faserstoffhaltigen Suspension S 2 auch ein geklärtes Filtrat gewonnen werden (Klärflotation). Im Betrieb ist der Flotationsbehälter 1 zum Teil mit Suspension gefüllt, die mit einem Blasen bildenden Gas vermischt ist. Hierzu dienen symbolisch gezeigte Mittel 4, durch die das Gas G eingeführt wird. In an sich bekannter Weise wird durch die Gasblasen ein Flotationsschaum 6 erzeugt, der oben auf der Suspension aufschwimmt. Dieser kann das restliche Volumen des Flotationsbehälters 1 teilweise oder, wie später noch gezeigt wird, auch vollständig ausfüllen. Die maximale Steighöhe der Gasblasen ist hier die Höhendifferenz H' zwischen Auslauf 3 und Füllstand der Suspension, da durch den Auslauf ein Teil der Gasblasen herabgeschleppt werden kann. Die Höhendifferenz zwischen Einlauf 2 und Füllstand ist als H" gekennzeichnet. Der Flotationsschaum 6 konzentriert hydrophobe unerwünschte Bestandteile, die aus der Faserstoffsuspension stammen. Ihm wird durch an einem Sprührohr 8 angebrachte Zuführeinrichtungen 7 eine Flüssigkeit F zugeführt. Diese Flüssigkeit kann z.B. Wasser sein, mit oder ohne Chemikalien. Die Zuführung erfolgt so, daß der Schaum dadurch nicht zerstört wird, sondern sich eher noch etwas besser ausbildet. Hierzu kann die Flüssigkeit so weit versprüht werden, daß die kinetische Energie der Tröpfchen zu gering ist, um eine Schaumblase zu zerstören. Es ist auch möglich, einen sehr dünnen Flüssigkeitsfilm zu bilden, der in den Schaum eingebracht wird. Oder es wird ein netzoder siebartiges Verteilelement verwendet, das die auftreffende Flüssigkeit fein verteilt.

Die Flüssigkeit kann mit Chemikalien, z.B. einem Tensid versetzt sein, die den Schaum zusätzlich stabilisieren. Wegen der kleinen Menge der zugeführten Flüssigkeit im Vergleich zu der Suspension kann dann mit geringen Chemikalienkosten ein deutlicher Effekt erzielt werden. Der so behandelte Flotationsschaum gelangt durch seitlichen Abfluß in die Flotationsschaum- Abführeinrichtung 5. Dort kann er, z.B. wie hier gezeigt, mit einem scharfen Wasserstrahl niedergeschlagen werden. Dieses Niederschlagen führt zum Zerplatzen der den Schaum bildenden Gasblasen. Danach wird er als Rejekt R abgeleitet.

Bei der in Fig. 2 gezeigten Vorrichtung wird die Flotation durch ein Zentrifugalfeld unterstützt. Ein solches Feld läßt sich, ähnlich wie bei Hydrozyklonen, durch tangentialen Einlauf der zu flotierenden Suspension S 1 erzeugen. Dabei überlagern sich das Zentrifugalfeld und das Erd-Schwerefeld. Bei der hier dargestellten Anordnung wird die Suspension von oben in einen zylindrischen Flotationsbehälter 1' eingepumpt und unten wieder daraus entfernt. Die Transportbewegung des Flotationsschaumes 6 ist, axial betrachtet, in derselben Richtung wie die der Suspension, d.h. von oben nach unten. Es kann aber auch eine genau entgegengesetzte Strömungsführung sinnvoll sein, bei der die Suspension unten zugeführt und oben abgezogen wird. Die hier dargestellte Anordnung eignet sich gut für die Durchführung des erfindungsgemäßen Verfahrens, da sich der durch die zugeführte Flüssigkeit F verbesserte Schaum aufgrund seines Gewichtes nach unten leicht abführen läßt. Das im zentralen Bereich des Flotationsbehälters 1 eingezeichnete Sprührohr 8' für die dem Flotationsschaum 6 zuzuführende Flüssigkeit F sind wiederum nur exemplarisch zu verstehen. Wie bereits erwähnt, gibt es hierfür auch noch andere Möglichkeiten. Es ist vorteilhaft, die zu flotierende Suspension S 1 mit Hilfe eines Turbulenzerzeugers 9, hier als Stufendiffusoren dargestellt, in Mikroturbulenz zu versetzen, um sie besser flotierbar zu machen und das zugegebene Gas G besser zu verteilen. Dadurch wird die Bildung von Gasblasen in der gewünschten Größe und Menge begünstigt.

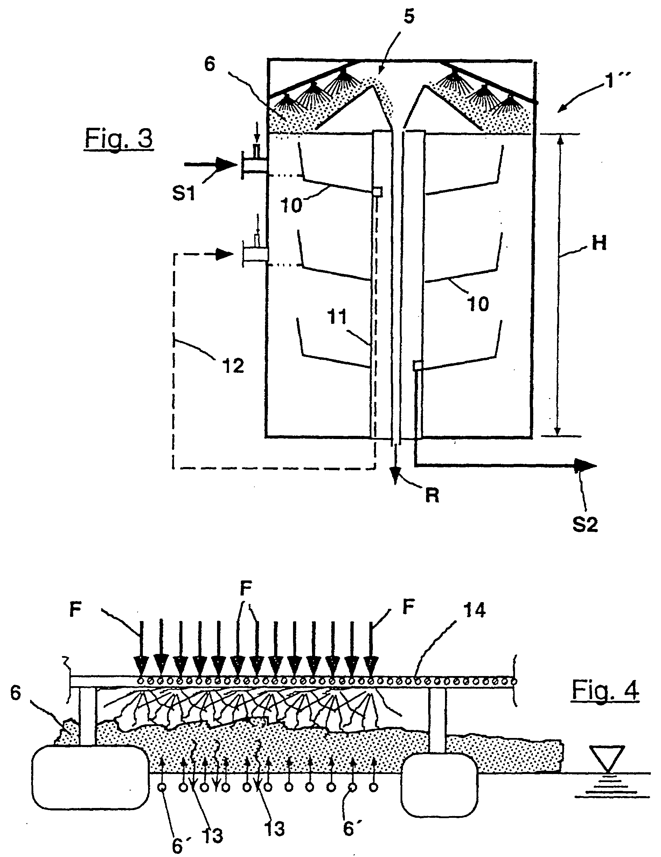

Die in Fig. 3 gezeigte Vorrichtung ist ebenfalls zylindrisch mit vertikaler Achse und hat eine Füllhöhe H von mindestens 3 m. Man spricht dann auch von Säulenflotation. Bei einem Flotationsverfahren für die Suspension von Papierstoffasern ist es günstig, daß in einem Flotationsbehälter 1" flächige Einbauten 10 eingesetzt werden, die das unerwünschte Vermischen von bereits gereinigter Suspension mit dem aufsteigenden Schaum verhindern. Bei dieser Ausführungsform ist es vorteilhaft, einen Teil der gereinigten Suspension aus Zwischenebenen des Flotationsbehälters 1" abzuziehen und stromaufwärts, bezogen auf die Strömungsrichtung der Gasblasen, wieder zuzugeben, eventuell nach erneuter Gaszumischung. Das ist durch gestrichelten Pfeil 13 angedeutet.

Fig. 4 zeigt spezielle apparative Details bei Durchführung des Verfahrens. In einigen Fällen ist es günstig, die zugeführte Flüssigkeit F noch einmal feiner zu verteilen, indem man sie auf ein siebförmiges Verteilelement 14 auftreffen läßt. Dieses schwimmt hier auf der Suspension auf, was unabhängig vom Füllstand im Flotationsbehälter für konstante Sprühbedingungen sorgen kann.

Ferner ist in dieser Figur schematisch das Auswaschen von hydrophilen Wertstoffen, die sich im Schaum befinden, gezeigt. Man erkennt schaumbildende Gasblasen 6', die aus der Suspension aufsteigen (Pfeil). Aus dem Flotationsschaum 6 heraus gelangen, veranlaßt oder zumindest unterstützt durch Zugabe der Flüssigkeit F, Wertstoffe, z.B. Papierfasem, zurück in die Suspension, was durch Schlängelpfeile 13 angedeutet ist.

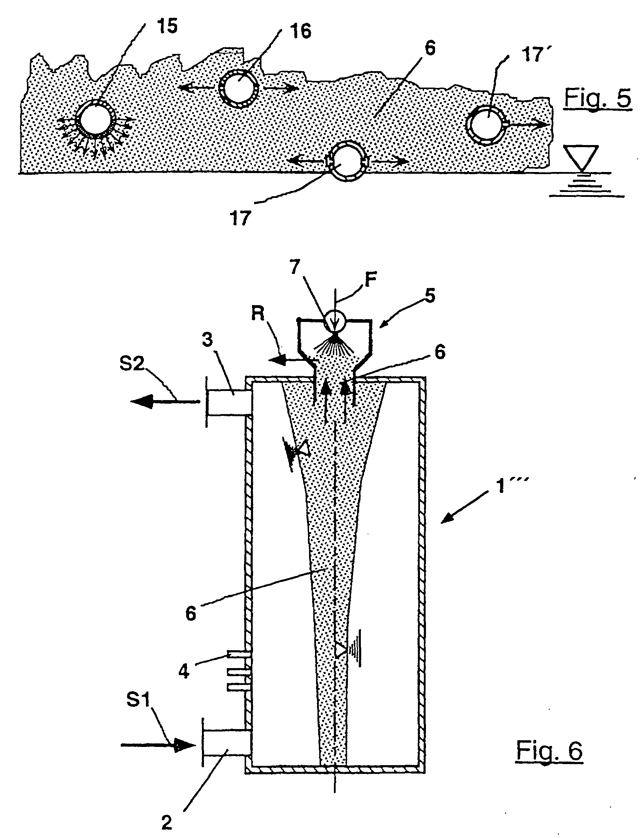

Wie bereits erwähnt, kann die Flüssigkeit von oben auf den Flotationsschaum, aber auch innerhalb desselben, zugeführt werden. D.h. die Zuführeinrichtung kann sowohl über dem Schaum angeordnet sein als auch darinnen. Mehrere Beispiele sind in der Fig. 5 gezeigt. So kann ein feingelochtes oder poröses Rohr 15 in den Schaum eintauchen oder ein geschlitztes Rohr 16 oder ein mit Sprühdüsen versehenes Rohr 17, 17'. Bei unsymmetrischem Austritt kann durch das Ausströmen der Schaumtransport unterstützt werden. Außerdem sind höhenunterschiedliche Positionen innerhalb des Flotationsschaumes dargestellt. Wegen des Aufsteigens des Flotationsschaumes wird auch bei unten liegender Zuführung der Schaum ausreichend benetzt.

Bei einer durch Zentrifugalkraft unterstützten Flotation kann die Strömungsführung der Suspension so gewählt werden, daß diese unten zu- und oben abgeführt wird, wie es im Beispiel der Fig. 6 dargestellt ist. Die Transportbewegung des Flotationsschaumes 6 ist ebenfalls axial von unten nach oben, so daß dieser durch eine oben angebrachte Flotationsschaum- Abführeinrichtung 5 aus dem eigentlichen Flotationsbehälter entfernt wird. Bei dieser Abfuhr nach oben, die in der Regel durch eine anliegende Druckdifferenz unterstützt werden muß, wird mit Hilfe von mindestens einer Zuführeinrichtung 7 die Flüssigkeit F dem Flotationsschaum 6 zugeführt. Bei einer solchen Strömungsführung kann der gesamte zentrale Kern des Flotationsbehälters mit Schaum gefüllt sein.

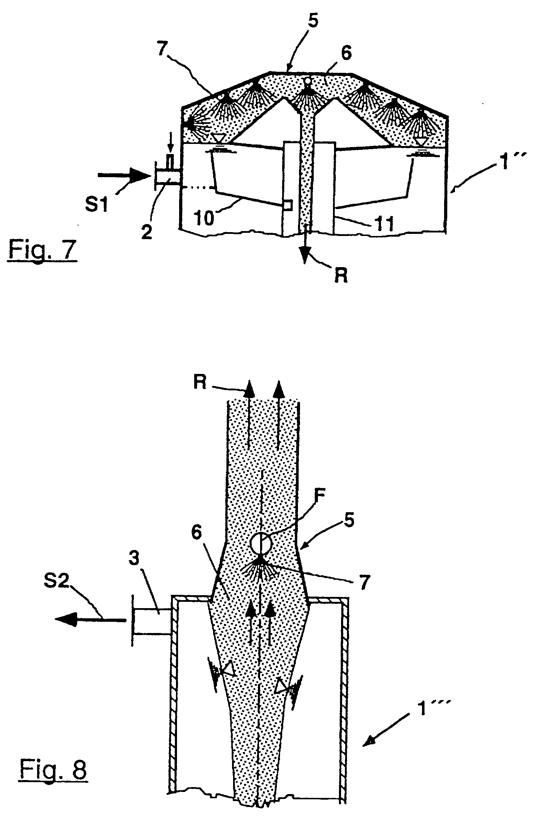

In vielen Fällen ist es gewünscht, daß der Flotationsbehälter vollständig mit Suspension und Schaum gefüllt ist, daß also kein nur mit Luft gefüllter Hohlraum entsteht. Auch dann läßt sich das Verfahren mit großem Vorteil anwenden. Die Zuführeinrichtung liegt dann innerhalb des Schaumes. Ein Beispiel für eine entsprechend anders betriebene Vorrichtung zeigt die Fig. 7 als Variante des anhand der Fig. 3 erläuterten Verfahrens, wobei auch einige Zuführeinrichtungen 7 hier anders angeordnet sind. Die Flotationsschaum-Abführeinrichtung 5 ist vollständig mit Schaum 6 gefüllt.

Die Fig. 8 stellt in Teilansicht eine Abwandlung des Gegenstandes von Fig. 6 dar, ebenfalls mit vollständiger Füllung des Flotationsbehälters 1"' durch Suspension und Flotationsschaum 6. Die Flotationsschaum-Abführeinrichtung 5 für den Rejekt R ist entsprechend angepaßt.

Es ist auch ohne weiteres denkbar, daß die Transportbewegung des Schaumes bei Flotationsvorrichtungen gemäß Fig. 2 oder 6, axial betrachtet, entgegengesetzt der Durchflußrichtung der Suspension gewählt wird.

Wird das Verfahren auf die eingangs erwähnte Klärflotation angewendet, kann die Begasung durch unter Druck gelöster und bei Entspannung frei werdender Luft unmittelbar bei Eintritt in den Flotationsbehälter erfolgen. Diese Technik ist an sich bekannt und führt zu einer großen Anzahl sehr feiner Luftblasen.

## Patentansprüche

1. Flotationsverfahren zur Abscheidung von zumindest einem Teil der in einer papierfaserhaltigen Suspension (S 1) enthaltenen Feststoffteilchen, bei dem in einem Flotationsbehälter (1, 1', 1", 1''') störende Feststoffteilchen zusammen mit Gasblasen im Flotationsschaum (6) gesammelt und abgeleitet werden,
**dadurch gekennzeichnet,**
**dass** dem bereits gebildeten Flotationsschaum (6) eine Flüssigkeit (F) derart und in solcher Menge zugeführt wird, dass durch diese Flüssigkeit (F) zumindest ein Teil des im Flotationsschaum enthaltenen Papierfasermaterials aus dem Schaum herausgewaschen und in die Suspension zurückgeführt wird.

2. Flotationsverfahren nach Anspruch 1,
**dadurch gekennzeichnet,**
**daß** die zugeführte Flüssigkeit (F) den Flotationsschaum (6) mit einer Benetzungsrate von höchstens 50 Liter pro Quadratmeter und Minute belegt.

3. Flotationsverfahren nach Anspruch 2,
**dadurch gekennzeichnet,**
**daß** die zugeführte Flüssigkeit (F) den Flotationsschaum (6) mit einer Benetzungsrate von höchstens 9 Liter pro Quadratmeter und Minute belegt.

4. Flotationsverfahren nach Anspruch 1, 2 oder 3,
**dadurch gekennzeichnet,**
**daß** die Flüssigkeit (F) als Flüssigkeitsfilm zugeführt wird.

5. Flotationsverfahren nach Anspruch 1, 2 oder 3,
**dadurch gekennzeichnet,**
**daß** die zugeführte Flüssigkeit (F) in so fein verteilter Form zugeführt wird, daß ein Sprühnebel entsteht.

6. Flotationsverfahren nach einem der voranstehenden Ansprüche,
**dadurch gekennzeichnet,**
**daß** beim Versprühen ein Tropfendurchmesser von höchstens 1,5 mm eingestellt wird.

7. Flotationsverfahren nach einem der voranstehenden Ansprüche,
**dadurch gekennzeichnet,**
**daß** im Flotationsbehälter (1, 1', 1", 1''') die Steighöhe der Gasblasen in der Suspension bis zum Flotationsschaum (6) maximal 3 m beträgt.

8. Flotationsverfahren nach einem der voranstehenden Ansprüche,
**dadurch gekennzeichnet,**
**daß** die Zufuhr der Flüssigkeit (F) von einer Stelle aus erfolgt, die sich oberhalb des Flotationsschaumes (6) befindet.

9. Flotationsverfahren nach einem der voranstehenden Ansprüche,
**dadurch gekennzeichnet,**
**daß** die Zufuhr der Flüssigkeit (F) von einer Stelle aus erfolgt, die sich innerhalb des Flotationsschaumes (6) befindet.

10. Flotationsverfahren nach einem der voranstehenden Ansprüche,
**dadurch gekennzeichnet,**
**daß** die Zufuhr der Flüssigkeit (F) von einer Stelle aus erfolgt, die sich im Bereich oder direkt an der Grenzschicht zwischen Flotationsschaum (6) und Suspension befindet.

11. Flotationsverfahren nach einem der voranstehenden Ansprüche,
**dadurch gekennzeichnet,**
**daß** der Flotationsschaum das Volumen zwischen Oberfläche der Suspension und der Innenwandung des Flotationsbehälters (1, 1 ', 1", 1''') im wesentlichen ausfüllt.

12. Flotationsverfahren nach einem der voranstehenden Ansprüche,
**dadurch gekennzeichnet,**
**daß** ein siebförmiges Verteilelement (14) verwendet wird, das von der Flüssigkeit (F) benetzt wird und diese fein verteilt dem Flotationsschaum (6) zuführt.

13. Flotationsverfahren nach Anspruch 12,
**dadurch gekennzeichnet,**
**daß** das siebförmige Verteilelement (14) über dem Flotationsschaum (6) angebracht ist.

14. Flotationsverfahren nach Anspruch 12,
**dadurch gekennzeichnet,**
**daß** das siebförmige Verteilelement (14) im Flotationsschaum (6) angebracht ist.

15. Flotationsverfahren nach Anspruch 12, 13 oder 14,
**dadurch gekennzeichnet,**
**daß** das siebförmige Verteilelement (14) auf der Suspension im Flotationsbehälter (1, 1', 1", 1''') aufschwimmt.

16. Flotationsverfahren nach Anspruch 12,13 oder 14,
**dadurch gekennzeichnet,**
**daß** das siebförmige Verteilelement (14) so bewegt wird, daß es den Schaumtransport unterstützt.

17. Flotationsverfahren nach einem der voranstehenden Ansprüche,
**dadurch gekennzeichnet,**
**daß** die Flußrichtung der zugegebenen Flüssigkeit (F) durch den Flotationsschaum (6) etwa rechtwinkelig zur Flußrichtung des Flotationsschaumes (6) ist, so daß das Kreuzstromprinzip angewendet wird.

18. Flotationsverfahren nach einem der Ansprüche 1 bis 16,
**dadurch gekennzeichnet,**
**daß** die Flußrichtung der zugegebenen Flüssigkeit (F) durch den Flotationsschaum (6) im wesentlichen entgegengesetzt der Flußrichtung des Flotationsschaumes (6) ist, so daß das Gegenstromprinzip angewendet wird.

19. Flotationsverfahren nach Anspruch 18,
**dadurch gekennzeichnet,**
**daß** der Flotationsschaum (6) von der Oberfläche der Suspension im Flotationsbehälter (1, 1', 1", 1''') gegen die Richtung des anliegenden Schwerefeldes abgeführt wird.

20. Flotationsverfahren nach Anspruch 18,
**dadurch gekennzeichnet,**
**daß** der Flotationsschaum (F) von der Oberfläche der Suspension im Flotationsbehälter (1, 1', 1", 1''') quer zur Richtung des anliegenden Schwerefeldes abgeführt wird.

21. Flotationsverfahren nach Anspruch 1,
**dadurch gekennzeichnet,**
**daß** eine das ausgewaschene Papierfasermaterial enthaltende Suspension separat abgeführt wird.

22. Flotationsverfahren nach einem der voranstehenden Ansprüche,
**dadurch gekennzeichnet,**
**daß** die Zuführung der Flüssigkeit (F) erfolgt, solange der Flotationsschaum (6) sich im Flotationsbehälter (1, 1', 1 ", 1''') befindet.

23. Flotationsverfahren nach einem der voranstehenden Ansprüche,
**dadurch gekennzeichnet,**
**daß** die zugeführte Flüssigkeit (F) Wasser ist.

24. Flotationsverfahren nach einem der Ansprüche 1 bis 23,
**dadurch gekennzeichnet,**
**daß** die zugeführte Flüssigkeit (F) eine Mischung aus Wasser und Chemikalien ist, wobei die Chemikalien von Art der verwendeten Flotationschemikalien sind.

25. Flotationsverfahren nach Anspruch 22,
**dadurch gekennzeichnet,**
**daß** die Flüssigkeit (F) auf oder im Flotationsschaum (6) aus Dampf kondensiert.

26. Flotationsverfahren nach Anspruch 23,
**dadurch gekennzeichnet,**
**daß** die Flüssigkeit (F) auf oder im Flotationsschaum (6) aus übersättigter Luft kondensiert

27. Flotationsvorrichtung zur Durchführung des Verfahrens nach einem der voranstehenden Ansprüche mit einem Flotationsbehälter (1, 1', 1", 1"'), einer Zuführleitung (2) für die zu flotierende Suspension, einer Abführleitung (3) für den durch Flotation gereinigten Gutstoff, Mittel (4) zur Zuführung von Blasen bildendem Gas, insbesondere Luft, sowie einer Flotationsschaum-Abführeinrichtung (5),
**dadurch gekennzeichnet,**
**daß** mindestens eine Zuführeinrichtung vorhanden ist, mit der eine Flüssigkeit (F) dem bereits gebildeten Flotationsschaum (6) so zugeführt wird, daß einerseits die störenden Feststoffteilchen zusammen mit den Gasblasen abgeleitet und anderseits das im Flotationsschaum enthaltene Papierfasermaterial zumindest zum Teil in die zu flotierende Suspension zurückgeführt wird.

28. Flotationsvorrichtung nach Anspruch 27,
**dadurch gekennzeichnet,**
**daß** ein siebförmiges Verteilelement (14) für die zugeführte Flüssigkeit (F) vorgesehen ist, um die Flüssigkeit zusätzlich feiner zu verteilen.

29. Flotationsvorrichtung nach Anspruch 28,
**dadurch gekennzeichnet,**
**daß** das siebförmige Verteilelement (14) auf der Suspension aufschwimmt.

30. Flotationsvorrichtung nach Anspruch 27,
**dadurch gekennzeichnet,**
**daß** die Flüssigkeit (F) dem bereits gebildeten Flotationsschaum (6) so zugeführt wird, daß der Flotationsschaum dadurch im wesentlichen nicht destabilisiert wird.

31. Flotationsvorrichtung nach Anspruch 27,
**dadurch gekennzeichnet,**
**daß** der Flotationsbehälter (1") eine Füllhöhe (H) von mindestens 2 m aufweist sowie flächige Einbauten (10) enthält, welche innerhalb des im Betrieb mit Suspension gefüllten Raumes sind und die Vermischung von gereinigter Suspension und Schaum behindern.

32. Flotationsvorrichtung nach einem der Ansprüche 27 bis 31,
**dadurch gekennzeichnet,**
**daß** aus dem Flotationsbehälter (1") Teilströme von Suspension abgezogen und an anderer Stelle wieder in den Flotationsbehälter eingeleitet werden.

33. Flotationsvorrichtung nach Anspruch 32,
**dadurch gekennzeichnet,**
**daß** die abgezogenen Teilströme vor dem emeuten Einleiten begast werden.

34. Flotationsvorrichtung nach Anspruch 27,
**dadurch gekennzeichnet,**
**daß** die Höhendifferenz (H') zwischen Auslauf (3) und Schaumunterseite maximal 2 m beträgt.

35. Flotationsvorrichtung nach Anspruch 27 oder 31,
**dadurch gekennzeichnet,**
**daß** die Höhendifferenz (H") zwischen Einlauf (2) und Schaumunterseite maximal 2 m beträgt.

36. Flotationsvorrichtung nach einem der Ansprüche 27 bis 35,
**dadurch gekennzeichnet,**
**daß** der Flotationsschaum (6) nach oben von der Suspensionsoberfläche abgesaugt wird.

37. Flotationsvorrichtung nach Anspruch 27,
**dadurch gekennzeichnet,**
**daß** der Flotationsbehälter (1', 1"') im wesentlichen zylindrisch ist und einen tangentialen Einlauf (2) für die zu flotierende Suspension aufweist sowie eine zentral angeordnete Flotationsschaum-Abführeinrichtung (5).

38. Flotationsvorrichtung nach Anspruch 27,
**dadurch gekennzeichnet,**
**daß** die Zuführeinrichtung (7) mindestens ein feingelochtes oder poröses Rohr (15) aufweist.

39. Flotationsvorrichtung nach Anspruch 27,
**dadurch gekennzeichnet,**
**daß** die Zuführeinrichtung (7) mindestens ein geschlitztes Rohr (16) aufweist.

40. Flotationsvorrichtung nach Anspruch 27,
**dadurch gekennzeichnet,**
**daß** die Zuführeinrichtung (7) mindestens ein mit Sprühdüsen versehenes Rohr (17, 17') aufweist.

## Claims

1. A flotation method for the precipitation of at least some of the solid particles contained in a suspension (S1) containing paper fibre, in which disturbing solid particles are collected and led off together with gas bubbles in the flotation foam (6) in a flotation container (1, 1', 1", 1"'),
**characterised in that** a liquid (F) is supplied to the already formed flotation foam (6) and in such an amount that at least some of the paper fibre material contained in the flotation foam is washed out of the foam and led back into the suspension.

2. A flotation method in accordance with claim 1, **characterised in that** the supplied liquid (F) acts on the flotation foam (6) at a wetting rate of at most 50 litres per square meter and.

3. A flotation method in accordance with claim 2, **characterised in that** the supplied liquid (F) acts on the flotation foam (6) at a wetting rate of at most 9 litres per square metre and minute.

4. A flotation method in accordance with claim 1, or claim 2 or claim 3, **characterised in that** the supplied liquid (F) is supplied as a liquid film.

5. A flotation method in accordance with claim 1, or claim 2 or claim 3, **characterised in that** the supplied liquid (F) is supplied in such a finely distributed form that a spray is created.

6. A flotation method in accordance with any one of the preceding claims, **characterised in that** a droplet diameter of at most 1.5 mm is set for the spraying.

7. A flotation method in accordance with any one of the preceding claims, **characterised in that** the rising height of the gas bubbles in the suspension amounts to a maximum of 3 m up to the flotation foam (6) in the flotation container (1, 1', 1", 1"').

8. A flotation method in accordance with any one of the preceding claims, **characterised in that** the supply of the liquid (F) takes place from a point which is located above the flotation foam (6).

9. A flotation method in accordance with any one of the preceding claims, **characterised in that** the supply of the liquid (F) takes place from a point which is located inside the flotation foam (6).

10. A flotation method in accordance with any one of the preceding claims, **characterised in that** the supply of the liquid (F) takes place from a point which is located in the region of or directly at the interface between the flotation foam (6) and the suspension.

11. A flotation method in accordance with any one of the preceding claims, **characterised in that** the flotation foam substantially fills up the volume between the surface of the suspension and the inner wall of the flotation container (1, 1', 1", 1"').

12. A flotation method in accordance with any one of the preceding claims, **characterised in that** a sieve-like distribution element (14) is used which is wetted by the liquid (F) and supplies this to the flotation foam (6) in a finely distributed manner.

13. A flotation method in accordance with claim 12, **characterised in that** the sieve-like distribution element (14) is attached above the flotation foam (6).

14. A flotation method in accordance with claim 12, **characterised in that** the sieve-like distribution element (14) is attached in the flotation foam (6).

15. A flotation method in accordance with claim 12, or claim 13 or claim 14, **characterised in that** the sieve-like distribution element (14) floats on the suspension in the flotation container (1, 1', 1", 1"').

16. A flotation method in accordance with claim 12, claim 13 or claim 14, **characterised in that** the sieve-like distribution element (14) is moved such that it supports the transport of the foam.

17. A flotation method in accordance with any one of the preceding claims, **characterised in that** the flow direction of the supplied liquid (F) through the flotation foam (6) is approximately at a right angle to the flow direction of the flotation foam (6) such that the cross-flow principle is applied.

18. A flotation method in accordance with any of claims 1 to 16, **characterised in that** the flow direction of the added liquid (F) through the flotation foam (6) is substantially opposite to the flow direction of the flotation foam (6) such that the counter-flow principle is applied.

19. A flotation method in accordance with claim 18, **characterised in that** the flotation foam (6) is led off from the surface of the suspension in the flotation container (1, 1', 1", 1"') against the direction of the gravitational field applied.

20. A flotation method in accordance with claim 18, **characterised in that** the flotation foam (6) is led off from the surface of the suspension in the flotation container (1, 1', 1", 1"') transversely to the direction of the gravitational field applied.

21. A flotation method in accordance with claim 1, **characterised in that** a suspension containing the washed-out paper fibre material is led off separately.

22. A flotation method in accordance with any one of the preceding claims, **characterised in that** the supply of the liquid (F) takes place as long as the flotation foam (6) is located in the flotation container (1, 1', 1", 1"').

23. A flotation method in accordance with any one of the preceding claims, **characterised in that** the supplied liquid (F) is water.

24. A flotation method in accordance with any one of claims 1 to 23, **characterised in that** the supplied liquid (F) is a mixture of water and chemicals, with the chemicals being of the kind of the flotation chemicals used.

25. A flotation method in accordance with claim 22, **characterised in that** the liquid (F) condenses from steam on or in the flotation foam (6).

26. A flotation method in accordance with claim 23, **characterised in that** the liquid (F) condenses from supersaturated air on or in the flotation foam (6).

27. A flotation apparatus for the carrying out of the method in accordance with any one of the preceding claims, comprising a flotation container (1, 1', 1", 1"'), a supply line (2) for the suspension to be floated, a discharge line (3) for the accepted stock cleaned by flotation, means (4) to supply gas forming bubbles, in particular air, and a flotation foam discharge device (5),
**characterised in that** at least one supply device (7) is present with which a liquid is supplied to the already formed flotation foam (6) such that the disturbing solid particles are led off together with the gas bubbles, on the one hand, and at least some of the paper fibre material contained in the flotation foam is led back into the suspension to be floated, on the other hand.

28. A flotation apparatus in accordance with claim 27, **characterised in that** a sieve-like distributor element (14) is provided for the supplied liquid (F) to additionally distribute the liquid more finely.

29. A flotation apparatus in accordance with claim 28, **characterised in that** the sieve-like distributor element (14) floats on the suspension.

30. A flotation apparatus in accordance with claim 27, **characterised in that** the liquid (F) is supplied to the already formed flotation foam (6) such that the flotation foam is no substantially destabilised thereby.

31. A flotation apparatus in accordance with claim 27, **characterised in that** the flotation container (1") has a filling level (H) of at least 2 m and includes areal installations (10) which are inside the space filled with suspension in operation and hinder the mixing of cleaned suspension and foam.

32. A flotation apparatus in accordance with any one of claims 27 to 31, **characterised in that** part flows of suspension are taken out of the flotation container (1") and led back into the flotation container again at a different point.

33. A flotation apparatus in accordance with claim 32, **characterised in that** the removed part currents are gas-flushed before the repeated leading back in.

34. A flotation apparatus in accordance with claim 27, **characterised in that** the height difference (H') between the outflow (3) and the lower side of the foam amounts to a maximum of 2 m.

35. A flotation apparatus in accordance with claim 27 or claim 31, **characterised in that** the height difference (H") between the inflow (2) and the lower side of the foam amounts to a maximum of 2 m.

36. A flotation apparatus in accordance with any one of claims 27 to 35, **characterised in that** the flotation foam (6) is upwardly sucked off the suspension foam.

37. A flotation apparatus in accordance with claim 27, **characterised in that** the flotation container (1', 1"') is substantially cylindrical and has a tangential inflow (2) for the suspension to be floated and a centrally arranged flotation foam discharge device (5).

38. A flotation apparatus in accordance with claim 27, **characterised in that** the supply device (7) has at least one finely perforated or porous pipe (15).

39. A flotation apparatus in accordance with claim 27, **characterised in that** the supply device (7) has at least one slit pipe (16).

40. A flotation apparatus in accordance with claim 27, **characterised in that** the supply device (7) has at least one pipe (17, 17') provided with atomiser nozzles.

## Revendications

1. Procédé de flottation pour la séparation d'au moins une partie des particules solides contenues dans une suspension (S1) à base de fibre de papier, dans lequel des particules solides gênantes dans un récipient de flottation (1, 1', 1", 1"') en même temps que des bulles de gaz sont collectées et évacuées dans l'écume de flottation (6), **caractérisé**
**en ce qu'**un liquide (F) est amené à l'écume de flottation (6) déjà formée de telle façon et dans une quantité telle qu'au moins une partie du matériau à fibre de papier contenu dans l'écume de flottation est enlevée par lavage de l'écume par ce liquide (F) et est recyclée dans la suspension.

2. Procédé de flottation selon la revendication 1, **caractérisé**
**en ce que** le liquide (F) amené occupe l'écume de flottation (6) avec un taux de mouillage maximal de 50 litres par mètre carré et par minute.

3. Procédé de flottation selon la revendication 2, **caractérisé**
**en ce que** le liquide (F) amené occupe l'écume de flottation (6) avec un taux de mouillage maximum de 9 litres par mètre carré et par minute.

4. Procédé de flottation selon la revendication 1, 2 ou 3, **caractérisé**
**en ce que** le liquide (F) amené est amené comme pellicule de liquide.

5. Procédé de flottation selon la revendication 1, 2 ou 3, **caractérisé**
**en ce que** le liquide (F) amené est amené sous une forme si finement répartie qu'il se produit un brouillard de fines gouttelettes.

6. Procédé de flottation selon l'une des revendications précédentes, **caractérisé**
**en ce qu'**un diamètre de goutte de 1,5 mm maximum est réglé lors de l'atomisation.

7. Procédé de flottation selon l'une des revendications précédentes, **caractérisé**
**en ce que** la hauteur d'ascension des bulles de gaz dans la suspension jusqu'à l'écume de flottation (6) est au maximum de 3 m dans le récipient de flottation (1, 1', 1", 1'").

8. Procédé de flottation selon l'une des revendications précédentes, **caractérisé**
**en ce que** l'amenée de liquide (F) s'effectue à partir d'un endroit qui se trouve au-dessus de l'écume de flottation (6).

9. Procédé de flottation selon l'une des revendications précédentes, **caractérisé**
**en ce que** l'amenée du liquide (F) s'effectue à partir d'un endroit qui se trouve à l'intérieur de l'écume de flottation (6).

10. Procédé de flottation selon l'une des revendications précédentes, **caractérisé**
**en ce que** l'amenée du liquide (F) s'effectue à partir d'un endroit qui se trouve dans la zone ou directement à la couche limite entre l'écume de flottation (6) et la suspension.

11. Procédé de flottation selon l'une des revendications précédentes, **caractérisé**
**en ce que** l'écume de flottation remplit sensiblement le volume entre la surface de la suspension et la paroi interne du récipient de flottation (1, 1', 1", 1'").

12. Procédé de flottation selon l'une quelconque des revendications précédentes, **caractérisé**
**en ce qu'**un élément répartiteur (14) en forme de tamis est utilisé, lequel est humecté par le liquide (F) et amène celui-ci finement réparti à l'écume de flottation (6).

13. Procédé de flottation selon la revendication 12, **caractérisé**
**en ce que** l'élément répartiteur (14) en forme de tamis est placé au-dessus de l'écume de flottation (6).

14. Procédé de flottation selon la revendication 12, **caractérisé**
**en ce que** l'élément répartiteur (14) en forme de tamis est placé dans l'écume de flottation (6).

15. Procédé de flottation selon la revendication 12, 13 ou 14, **caractérisé**
**en ce que** l'élément répartiteur (14) en forme de tamis flotte sur la suspension dans le récipient de flottation (1, 1', 1", 1'").

16. Procédé de flottation selon la revendication 12, 13 ou 14, **caractérisé**
**en ce que** l'élément répartiteur (14) en forme de tamis est déplacé de telle sorte qu'il favorise le transport de l'écume.

17. Procédé de flottation selon l'une des revendications précédentes, **caractérisé**
**en ce que** le sens d'écoulement du liquide (F) amené dans l'écume de flottation (6) est à peu près perpendiculaire au sens d'écoulement de l'écume de flottation (6), de sorte que le principe des écoulements croisés est appliqué.

18. Procédé de flottation selon l'une des revendications 1 à 16, **caractérisé**
**en ce que** le sens d'écoulement du liquide (F) amené dans l'écume de flottation (6) est sensiblement opposé au sens d'écoulement de l'écume de flottation (6), de sorte que le principe de contre-courant est appliqué.

19. Procédé de flottation selon la revendication 18, **caractérisé**
**en ce que** l'écume de flottation (6) est évacuée de la surface de la suspension dans le récipient de flottation (1, 1', 1", 1"') dans le sens contraire à celui du champ de gravitation appliqué.

20. Procédé de flottation selon la revendication 18, **caractérisé**
**en ce que** l'écume de flottation (F) est évacuée de la surface de la suspension dans le récipient de flottation (1, 1', 1", 1"') transversalement à la direction du champ de gravitation appliqué.

21. Procédé de flottation selon la revendication 1, **caractérisé**
**en ce qu'**une suspension contenant le matériau à fibre de papier enlevé par lavage est évacuée séparément.

22. Procédé de flottation selon l'une des revendications précédentes, **caractérisé**
**en ce que** l'amenée du liquide (F) s'effectue aussi longtemps que l'écume de flottation (6) se trouve dans le récipient de flottation (1, 1', 1", 1"').

23. Procédé de flottation selon l'une des revendications précédentes, **caractérisé**
**en ce que** le liquide (F) amené est de l'eau.

24. Procédé de flottation selon l'une des revendications 1 à 23, caractérisé
en ce le liquide (F) amené est un mélange d'eau et de produits chimiques, les produits chimiques étant du type des produits chimiques de flottation utilisés.

25. Procédé de flottation selon la revendication 22, **caractérisé**
**en ce que** le liquide (F) est condensé sur ou dans l'écume de flottation (6) à partir de vapeur.

26. Procédé de flottation selon la revendication 23, **caractérisé**
**en ce que** le liquide (F) est condensé sur ou dans l'écume de flottation (6) à partir d'air sursaturé.

27. Dispositif de flottation pour la mise en oeuvre du procédé selon l'une quelconque des revendications susmentionnées avec un récipient de flottation (1, 1', 1", 1"'), une conduite d'amenée (2) pour la suspension flottante, une conduite d'évacuation (3) pour la pâte à papier finie nettoyée par flottation, des moyens (4) pour l'amenée du gaz formant des bulles, en particulier de l'air, et un dispositif d'évacuation d'écume de flottation (5), **caractérisé**
**en ce qu'**au moins un dispositif d'amenée est présent, avec lequel un liquide (F) est amené à l'écume de flottation (6) déjà formée de telle sorte que, d'une part, les particules solides gênantes sont évacuées en même temps que les bulles de gaz et, d'autre part, le matériau à fibre de papier contenu dans l'écume de flottation est recyclé au moins en partie dans la suspension à flotter.

28. Dispositif de flottation selon la revendication 27, **caractérisé**
**en ce qu'**un élément répartiteur (14) en forme de tamis est prévu pour le liquide (F) amené pour répartir le liquide de façon encore plus fine.

29. Dispositif de flottation selon la revendication 28, **caractérisé**
**en ce que** l'élément répartiteur (14) en forme de tamis flotte sur la suspension.

30. Dispositif de flottation selon la revendication 27, **caractérisé**
**en ce que** le liquide (F) est amené à l'écume de flottation (6) déjà formée de telle sorte que l'écume de flottation n'en est pas sensiblement déstabilisée.

31. Dispositif de flottation selon la revendication 27, **caractérisé**
**en ce que** le récipient de flottation (1") présente une hauteur de remplissage (H) d'au moins 2 m et contient des inserts (10) plats qui sont à l'intérieur de l'espace rempli de suspension pendant le service et empêchent le mélange de la suspension nettoyée et de l'écume.

32. Dispositif de flottation selon l'une quelconque des revendications 27 à 31, **caractérisé**
**en ce que** des flux partiels de suspension sont enlevés du récipient de flottation (1'') et sont réintroduits à un autre endroit à nouveau dans le récipient de flottation.

33. Dispositif de flottation selon la revendication 32, **caractérisé**
**en ce que** les flux partiels retirés sont traités au gaz avant la nouvelle introduction.

34. Dispositif de flottation selon la revendication 27, **caractérisé**
**en ce que** la différence de hauteur (H') entre l'évacuation (3) et la partie inférieure de l'écume est au maximum de 2 m.

35. Dispositif de flottation selon la revendication 27 ou 31, **caractérisé**
**en ce que** la différence de hauteur (H') entre l'entrée (2) et la partie inférieure de l'écume est au maximum de 2 m.

36. Dispositif de flottation selon l'une des revendications 27 à 35, **caractérisé**
**en ce que** l'écume de flottation (6) est aspirée vers le haut de la surface de la suspension.

37. Dispositif de flottation selon la revendication 27, **caractérisé**
**en ce que** le récipient de flottation (1', 1"') est sensiblement cylindrique et présente une entrée (2) tangentielle pour la suspension à flotter et un dispositif d'évacuation d'écume de flottation (5) disposé de façon centrale.

38. Dispositif de flottation selon la revendication 27, **caractérisé**
**en ce que** le dispositif d'amenée (7) présente au moins un tuyau (15) à perforation fine ou poreux.

39. Dispositif de flottation selon la revendication 27, **caractérisé**
**en ce que** le dispositif d'amenée (7) présente au moins un tuyau (16) fendu.

40. Dispositif de flottation selon la revendication 27, **caractérisé**
**en ce que** le dispositif d'amenée (7) présente au moins un tuyau (17, 17') pourvu de pulvérisateurs.
